# EUROPEAN PATENT APPLICATION

(11) **EP 4 109 229 A1**
(43) Date of publication of application: **28.12.2022**
(21) Application number: 21756872.4
(22) Date of filing: 25.01.2021
(51) Int. Cl.: G06F 3/0485

(54) **NOTIFICATION MESSAGE PROCESSING METHOD AND APPARATUS, AND ELECTRONIC DEVICE, AND STORAGE MEDIUM**

(30) Priority: 21.02.2020 CN 202010106313
(71) Applicant: GUANGDONG OPPO MOBILE TELECOMMUNICATIONS CORP., LTD., Dongguan, Guangdong 523860 (CN)
(72) Inventor: WU, Henggang, Dongguan, Guangdong 523860 (CN)
(74) Representative: Manitz Finsterwald Patent- und Rechtsanwaltspartnerschaft mbB
(86) International application number: PCT/CN2021/073599
(87) International publication number: WO 2021/164498

(57) **Abstract**

Provided are a notification message processing method and apparatus, and an electronic device, and a storage medium, which relate to the technical field of terminal devices. The method comprises: when a first sliding operation is detected, displaying a notification center interface, wherein the notification center interface includes a notification message view and an shelf view, and a received notification message is displayed in the notification message view; and when a click operation for a clear key in the shelf view is detected, clearing all the received notification messages. The present disclosure can improve the efficiency of clearing notification messages.

## Description

### CROSS-REFERENCE TO RELATED APPLICATIONS

The present disclosure claims priority of Chinese Patent Application No. 202010106313.0 and application name of "NOTIFICATION MESSAGE PROCESSING METHOD AND APPARATUS, AND ELECTRONIC DEVICE, AND STORAGE MEDIUM", filed on February 21, 2020, the contents of which are hereby incorporated by reference.

### TECHNICAL FIELD

The present disclosure relates to the field of terminal devices, and in particular, to a notification message processing method, a notification message processing apparatus, an electronic device, and a computer-readable storage medium.

### BACKGROUND

With development of terminal devices, a user can install various applications in the a terminal device such as a smart phone to meet needs of daily work and life. The user can also receive notification messages pushed by various applications. However, if the number of notification messages is too large, each time the user wants to clear all the notification messages, an operation is complex and clearing efficiency is low.

### SUMMARY

The present disclosure aims to provide a notification message processing method, a notification message processing apparatus, an electronic device, and a computer-readable storage medium, and to overcome, to a certain extent, the problems of complex operation and low clearing efficiency in clearing notification messages caused by limitations and defects of related technologies.

In accordance with a first aspect of the present disclosure, a notification message processing method is provided. The method includes: displaying a notification center interface in response to detecting a first sliding operation, wherein the notification center interface includes a notification message view and a shelf view, and the notification message view displays notification messages; and clearing all the notification messages in response to detecting a click operation on a clearing key in the shelf view.

In accordance with a second aspect of the present disclosure, a notification message processing apparatus is provided. The apparatus includes an interface display module and a clearing module. The interface display module is configured to display a notification center interface in response to detecting a first sliding operation. The notification center interface includes a notification message view and a shelf view, and the notification message view displays notification messages. The clearing module is configured to clear all the notification messages in response to detecting a click operation on a clearing key in the shelf view.

In accordance with a third aspect of the present disclosure, an electronic device is provided. The electronic device includes: a processor and a memory storing executable instructions of the processor. The processor is configured to perform the above described notification message processing method by executing the executable instruction.

In accordance with a fourth aspect of the present disclosure, a computer-readable storage medium storing a computer program is provided. When the computer program is executed by the processor, the processor performs the the above notification message processing method.

The exemplary embodiments of the present disclosure may have some or all of the following beneficial effects: in the notification message processing method provided by an example embodiment of the present disclosure, by setting the full clearing key in the shelf view, the user can realize the function of clearing all the notification messages without sliding to the last notification message when there are many notification messages. It can be seen that this method is simple to operate, can improve the efficiency of clearing notification messages and improve the user experience.

It should be understood that the above general description and the following detailed description are only exemplary and explanatory, and do not limit the present disclosure.

### BRIEF DESCRIPTION OF THE DRAWINGS

The drawings herein are incorporated into and form a part of the description, showing embodiments in accordance with the present disclosure, and are configured together with the description to explain the principles of the present disclosure. Apparently, the drawings described below are only some embodiments of the present disclosure. One skilled in the art may acquire other drawings based on these drawings, without making any inventive work.
FIG. 1 shows a structural schematic view of a computer system for implementing an electronic device provided by some embodiments of the present disclosure.
FIG. 2 shows a schematic view of a notification center interface in a related art.
FIG. 3 shows another schematic view of the notification center interface in the related art.
FIG. 4 shows a flowchart of a notification message processing method provided by some embodiments of the present disclosure.
FIG. 5 shows a schematic view of a notification center interface provided by some embodiments of the present disclosure.
FIG. 6 shows another schematic view of a notification center interface provided by some embodiments of the present disclosure.
FIG. 7 shows a code flowchart of a notification center view provided by some embodiments of the present disclosure.
FIG. 8 shows a structural schematic view of a notification message processing apparatus provided by some embodiments of the present disclosure.

### DETAILED DESCRIPTION OF THE PREFERRED EMBODIMENTS

Embodiments will now be described more fully with reference to the drawings. However, the exemplary embodiments can be implemented in a variety of forms and should not be construed as being limited to examples set forth herein. On the contrary, these exemplary embodiments are provided to make the present disclosure more comprehensive and complete, and fully convey the concept of the exemplary embodiments to those skilled in the art. Described features, structures or characteristics may be combined in one or more embodiments in any suitable manner. In the following description, many specific details are provided to give a full understanding of the embodiments of the present disclosure. However, those skilled in the art will realize that the technical scheme of the present disclosure can be practiced without omitting one or more of the specific details, or by using other methods, components, apparatuses, steps, and the like. In other cases, well-known structures, methods, apparatuses, implementations, or operations are not shown or described in detail to avoid confusing aspects of the present disclosure.

In addition, the drawings are only schematic diagrams of the present disclosure and are not necessarily drawn to scale. Same reference numerals in figures represent the same or similar parts, so repeated description about them will be omitted. Some of the block diagrams shown in the drawings are functional entities and do not necessarily correspond to physically or logically independent entities. These functional entities may be implemented in software form, or in one or more hardware modules or integrated circuits, or in different networks and/or processor devices and/ or micro-controller devices.

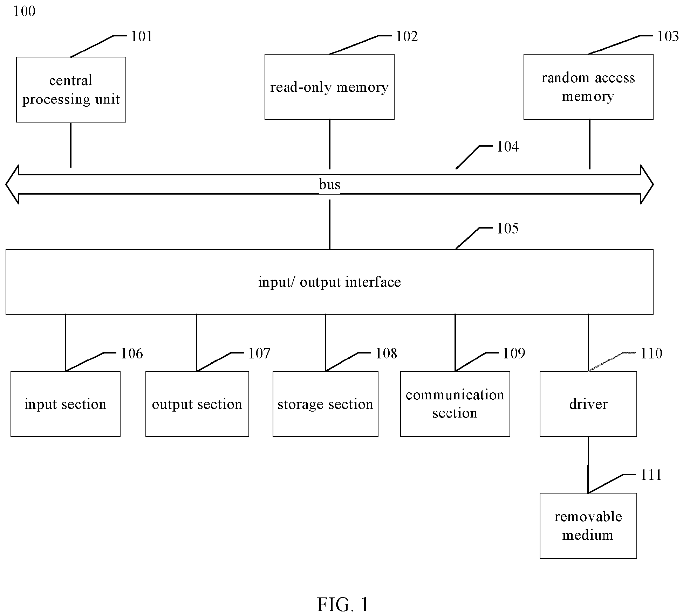

FIG. 1 shows a structural schematic view of a computer system for implementing an electronic device provided by some embodiments of the present disclosure.

It should be noted that the computer system 100 of the electronic device shown in FIG. 1 is only an example and do not limit functions and scope of use of the embodiments of the present disclosure.

As shown in FIG. 1, the computer system 100 includes a central processing unit 101. The central processing unit 101 may perform various appropriate actions and processes based on a program stored in a read-only memory 102 or a program loaded from a storage section 108 into a random access memory 103. The random access memory 103 also store various programs and data required for system operations. The central processing unit 101, the read-only memory 102, and the random access memory 103 are connected to each other through a bus 104. An input/ output interface 105 is also connected to the bus 104.

The following components, such as an input section 106 including a keyboard, a mouse, and the like; an output section 107 including a cathode ray tube (CRT), a liquid crystal display (LCD), a speaker and the like; a storage section 108 including a hard disk or the like; and a communication section 109 including a network interface card such as a local area network card, a modem, and the like, are connected to the input/ output interface 105. The communication section 109 performs communication processing via a network such as the Internet. A driver 110 is also connected to the input/ output interface 105 as necessary. A removable medium 111, such as a magnetic disk, an optical disk, a magneto-optical disk, a semiconductor memory, and the like, is mounted on the drive 110 as necessary so that a computer program read from the removable medium 111 is mounted in the storage section 108 as necessary.

In particular, according to embodiments of the present disclosure, the process described below with reference to a flowchart may be implemented as a computer software program. For example, embodiments of the present disclosure provide a computer program product including a computer program carried on a computer-readable storage medium, the computer program including program code configured to execute the method shown in the flowchart. In such embodiments, the computer program may be downloaded and installed from a network through the communication section 109, and/or installed from a removable medium 111. When the computer program is executed by the central processing unit 101, various functions defined in the method and an apparatus of the present disclosure are executed.

It should be noted that the computer-readable storage medium shown in the present disclosure may be a computer-readable signal medium, a computer-readable storage medium, or any combination of the two. The computer-readable storage medium may be, for example, but is not limited to, an electrical, magnetic, optical, electromagnetic, infrared, or semiconductor system, apparatus, or device, or any combination of the above. More specific examples of computer-readable storage medium may include, but are not limited to, an electrical connector with one or more wires, a portable computer disk, a hard disk, a random access memory, a read-only memory, an erasable programmable read-only memory (EPROM or a flash memory), an optical fiber, a portable compact disk read-only memory (CD-ROM), an optical memory, a magnetic memory, or any suitable combination of the above. In the present disclosure, the computer-readable storage medium may be any tangible medium containing or storing a program, and the program may be used by an instruction execution system, apparatus, or device, or any combination of the above. In the present disclosure, the computer-readable signal medium may include a data signal transmitting in baseband or as part of a carrier wave, the data signal carries the computer-readable program code. Such transmitted data signal may take a variety of forms, including but not limited to an electromagnetic signal, an optical signal, or any suitable combination of the above. The computer-readable signal medium may also be any computer-readable storage medium other than the computer-readable storage medium. The computer-readable storage medium may send, transmit, or transfer the program used by the instruction execution system, apparatus, or device, or any combination of the above. The program code included on the computer-readable storage medium can be transmitted by any suitable medium, including but not limited to wireless, electric wire, optical cable, radio frequency, and the like, or any suitable combination of the above.

The flowcharts and block diagrams in the drawings show possible architectures, functions, and operations of systems, methods, and computer program products provided by various embodiments of the present disclosure. In this regard, each block in a flowchart or block diagram may mean a module, program segment, or part of the code. The module, program segment, or part of the code contains one or more executable instructions for implementing a specified logic function. It should also be noted that in some alternative implementations, functions indicated in a block may also occur in a different sequence from that indicated in the drawings. For example, two connected blocks may actually be executed in substantially parallel, and they may sometimes be executed in reverse sequence, depending on the function involved. It should also be noted that each block in the block diagram or flowchart and combination of the blocks in the block diagram or flowchart can be implemented by a dedicated hardware based system that performs functions or operations, or by a combination of dedicated hardware and computer instructions.

Units described in the embodiments of the present disclosure can be implemented in a software or a hardware, and the described units can also be set in a processor. The names of these units do not, under certain circumstances, limit on the unit itself.

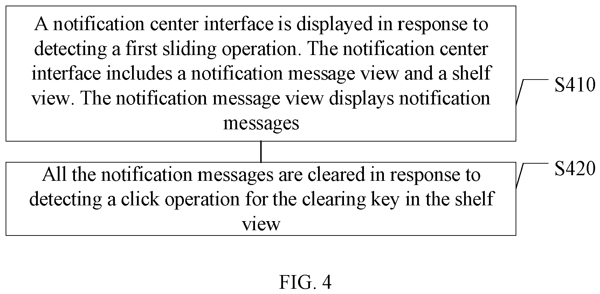

On the other hand, the present disclosure also provides a computer-readable storage medium. The computer-readable storage medium may be included in the electronic device described in the above embodiment, or may exist separately without being assembled into the electronic device. The computer-readable storage medium carries one or more programs, and when the one or more programs are executed by the electronic device, the electronic device is enabled to implement the method described in the following embodiments. For example, the electronic device may implement various operations as shown in FIG. 4.

The followings describe the technical scheme of the embodiments of the present disclosure in detail.

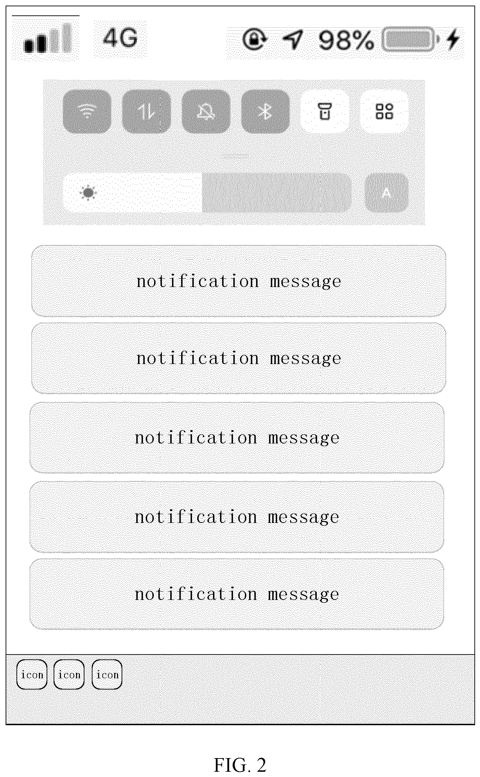

At present, for most smart phones, notification messages pushed by applications can be displayed by a user sliding down a screen. In addition, a notification center interface can be fully displayed when the user slides downing to a large distance. As shown in FIG. 2, the notification center interface can include a control center view and a notification center view. The notification center view can include a notification message view and a shelf view. Of course, the notification center interface may not include the control center view. The notification message view can display the notification messages. When there are a large number of notification messages and the notification message view cannot display all the notification messages on the screen, icons corresponding to the notification messages not displayed can be displayed in the shelf view. The shelf view can be at a bottom of the notification center interface.

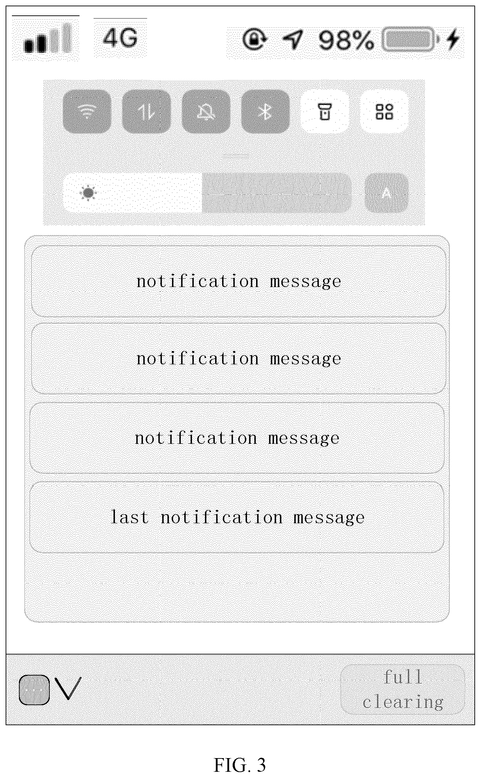

When the user slides up, the notification messages not displayed can be displayed in the notification message view successively, and corresponding icons can be removed from the shelf view. When a last notification message is displayed in the notification message view, the shelf view is removed and the footer view can be displayed. As shown in FIG. 3, the footer view at the bottom can contain a full clearing key and a storage key. The user can clear all the notification messages by clicking the full clearing key.

It can be seen that when the user wants to clear all the notification messages, he or she needs to slide up the notification messages in the notification message view. The footer view is not displayed until the last notification message in the notification center interface is displayed, and all the notification messages are cleared by clicking the full clearing key 31 in the footer view. Therefore, operations of this process is complex and clearing efficiency is low.

In order to solve the above problem, the present disclosure provides a notification message processing method, a notification message processing apparatus, an electronic device, and a computer-readable storage medium, to improve the efficiency of clearing notification messages.

As shown in FIG. 4, FIG. 4 shows a flowchart of a notification message processing method provided by some embodiments of the present disclosure. The method may include the following operations.

At block S410, a notification center interface is displayed in response to detecting a first sliding operation. The notification center interface includes a notification message view and a shelf view. The notification message view displays notification messages.

At block S420, all the notification messages are cleared in response to detecting a click operation for the clearing key in the shelf view.

In the notification message processing method of the embodiments of the present disclosure, the user can realize the function of clearing all the notification messages without sliding to the last notification message by setting the full clearing key in the shelf view when there are many notification messages. It can be seen that the method is simple to operate, can improve the efficiency of clearing the notification messages and improve the user experience.

The followings describe the notification message processing method of the embodiments of the present disclosure is described in more.

In the operations at block S410, the notification center interface is displayed in response to detecting the first sliding operation. The notification center interface includes the notification message view and the shelf view. The notification message view displays the notification messages.

In the embodiments of the present disclosure, when a screen of a terminal device (e. g., a smart phone, a tablet computer and the like) is lighted, whether a current interface is a main interface or an application interface, the notification center interface can be displayed after the user performs a sliding operation. For most terminal devices, the sliding operation can be sliding down from a top of the screen, and the notification center interface may not be displayed when a sliding distance is small; and the notification center interface is displayed when the sliding distance is large.

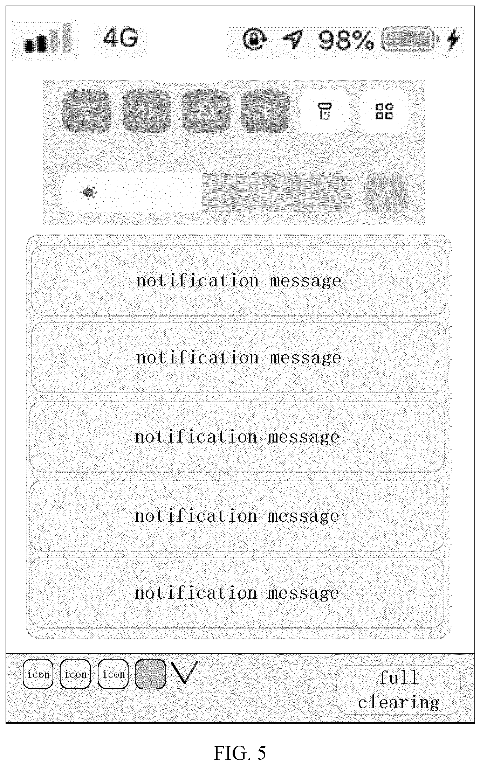

When the notification center interface includes a control center view and a notification center view, as shown in FIG. 5, the user can set the wireless network, Bluetooth, screen brightness and the like of a terminal device in the control center view. The notification center view may include a notification message view and a shelf view. The notification message view may display the notification messages, for example, notification messages pushed by a system or applications to the terminal device. The shelf view can display icons, for example, application icons. Icons corresponding to different applications can be different.

The notification message view can display the notification messages. When the number of the notification messages is small, that is, all the notification messages can be displayed in the notification message view. Under this circumstance, the user can visually see all the notification messages received by the terminal device. However, when the number of the notification messages is large, the notification message view cannot display all the notification messages on the screen, that is, when all the notification messages are not displayed in the notification message view, an application icon corresponding to a notification message not displayed can be displayed in the shelf view. In this way, the user can know in advance which application pushed the notification message.

When all the notification messages are not displayed in the notification message view, the user can view the notification messages not displayed by sliding. Specifically, in the notification center interface, the notification message not displayed is displayed in the notification message view in response to detecting a second sliding operation, and the application icon corresponding to the notification message not displayed is removed in the shelf view.

In some embodiments of the present disclosure, the second sliding operation may be preset according to user's usage habits. For example, the user usually views the message from top to bottom, so the second sliding operation may be upward sliding. In addition, during the sliding process, the application icon corresponding to the notification message can be removed from the shelf view for each notification message not previously displayed. When the user has finished viewing all the notification messages, the shelf view will be empty.

On the contrary, a displayed notification message can be removed from the notification message view in response to detecting a third sliding operation, and the application icon corresponding to the displayed notification message can be displayed in the shelf view. During the sliding process, the application icon corresponding to the notification message can be displayed in the shelf view every time the notification message is removed.

In the operations at block S420, all the notification messages are cleared in response to detecting a user's click operation for the clearing key in the shelf view.

In the embodiments of the present disclosure, the full clearing key and the storage key of the footer view can be integrated into the shelf view. Application icons can be displayed in the shelf view at the bottom of FIG. 2. The footer view at a bottom of FIG. 3 includes the full clearing key and the storage key, and the shelf view and the footer view will not appear at the same time. In the embodiments, the full clearing key and the storage key in the footer view can be integrated into the shelf view, and the footer view can be set as hidden, only retaining the function of measuring positions, and not participating in rendering of the interface.

For the shelf view, please see the shelf view at a bottom of FIG. 5. It can be seen that the shelf view can not only display the application icons, but also include the full clearing key and the storage key. The user can click the full clearing key to clear all the notification messages. Specifically, when all the notification messages are not displayed in the notification message view, displayed notification messages and not displayed notification messages in the notification message view are cleared, and when the notification messages are all displayed in the notification message view, the notification messages displayed in the notification message view are cleared. It can be seen that when the number of the notification messages is large, the user can clear all the notification messages without sliding up to the last notification. Therefore, the operation is simple and the clearing efficiency is high.

In the embodiments of the present disclosure, the shelf view includes the storage key , and the user can store the notification messages as necessary. Specifically, a notification message is removed from the notification message view, and an application icon corresponding to the notification message displayed in the notification message view is hidden in the storage key in response to detecting a storage operation for the notification message displayed in the notification message view.

For example, after the user presses and holds the notification message, an option box for moving the notification message can be displayed. After the user checks the option box, the notification message will be removed from the notification message view, and the application icon corresponding to the notification message is hidden in the storage key.

During the user's sliding process, the notification messages not displayed can also be displayed in the notification message view. Therefore, when the notification messages whose application icons are hidden in the storage key display in the notification message view, the application icons can be directly displayed, and specific notification messages can be stored in the application icon. When the user clicks storage key of the application icons, the specific notification messages will be displayed. Under this circumstance, notification messages that the user do not need to view can be directly ignored, thus saving the user's time.

In the embodiments of the present disclosure, in response to detecting the user's click operation for the storage key, the application icon hidden in the storage key can be displayed in the shelf view. Under this circumstance, all the application icons hidden in the storage key can be displayed. Then, during the sliding process, all the notification messages can be displayed. Then, for notification messages that have been stored by the user, the user can also recover the notification messages. For example, when the user presses and holds a notification message, a recovery option box can be displayed. After checking the recovery option box, the user recover the notification message.

It can be understood that the number of application icons displayed in the shelf view in the embodiments of the present disclosure always changes with the sliding operation of the user. In addition, the shelf view also includes the full clearing key and the storage key. In order to make the icons and keys in the shelf view neat and convenient for the user to view, the storage key can move with the change of the number of application icons displayed in the shelf view.

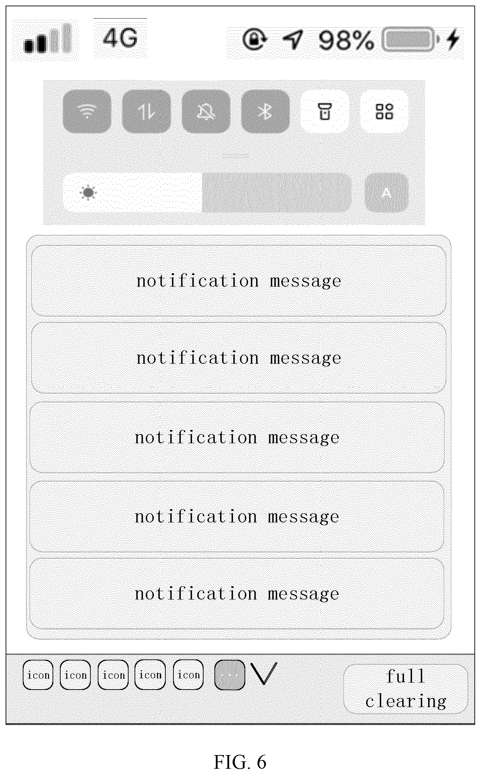

For example, the full clearing key is located on a right side of the shelf view, and the application icons are located on a left side of the shelf view. When the number of the application icons changes, the storage key can be located between the application icons and the full clearing key. As shown in FIG. 6, FIG. 6 shows another schematic view of the notification center interface provided by some embodiments of the present disclosure. Compared with FIG. 5, the number of application icons displayed in the shelf view is increased by two, and the storage key is still located on the right side of the application icons. Under this circumstance, the user can more intuitively view the application icons in the shelf view and the number of application icons.

The following describes a code flow corresponding to the notification center view in some embodiments of the present disclosure.

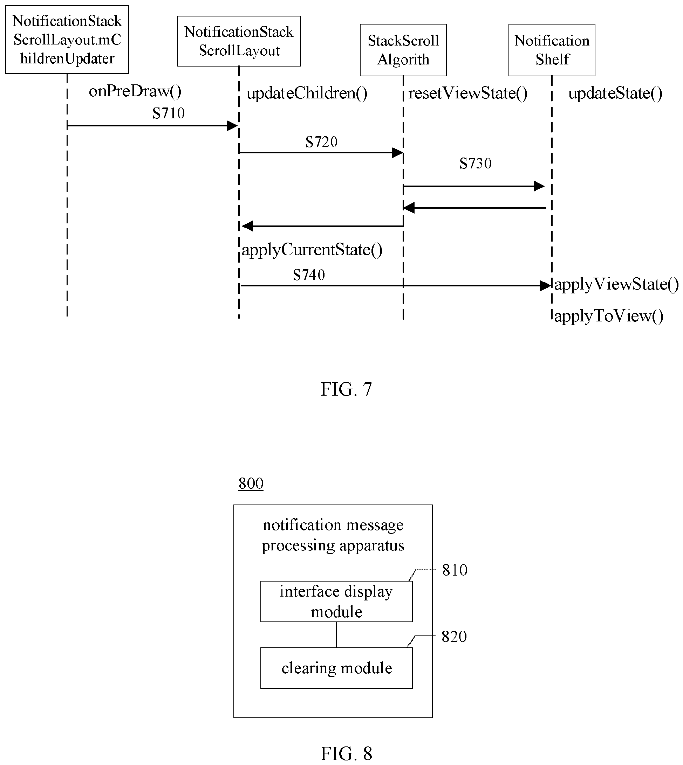

As shown in FIG. 7, FIG. 7 shows the code flow chart of the notification center view provided by some embodiment of the present disclosure, the code flow chart includes the following operations.

At block S710, a notification center interface will be updated in response to detecting a user sliding in the notification center interface. An object named mChildrenUpdater can be registered for the notification center view NotificationStackScrollLayout during updating. The object can be configured to monitor a drawing process of the notification center view, so that an onPreDraw method is called back before the notification center view is ready to be drawn. The onPreDraw method calls an updateChildren method of the notification center view.

At block S720, the updateChildren method can call a resetViewState method of a notification algorithm tool class StackScrollAlgorith. The resetViewState method is mainly configured to refresh state properties of each view control in the notification center view.

At block S730, an updateState method of the shelf view can be called in the resetViewState method.

The updateState method is applicable to updating a view state object ViewState of the shelf view NotificationShelf. The ViewState saves a view state of the NotificationShelf. The updateState method can recalculate an icon state, a background display state and a position of the NotificationShelf.

At block S740, after recalculation of the shelf view, applyCurrentState in NotificationStack-ScrollLayout can call an applyViewState method in the NotificationShelf. An applyViewState method can call an applyToView method. The applyToView method can redraw an NotificationShelf view according to a previously updated ViewState to refresh view display.

The present disclosure realizes the function of integrating the storage key and the full clearing key in the shelf view by optimizing the updateState method of the shelf view.

Specifically, assume that a coordinate origin is located in an upper left corner of the screen, an X axis is in a positive direction from left to right, a Y axis is in a positive direction from top to bottom, TranslationY represents a vertical coordinate of the shelf view in the screen, ViewEnd represents a vertical coordinate of a bottom of a last notification message measured by the system, and maxShelfEnd represents a drop-down distance of the current notification center interface.

When the notification messages do not occupy a full screen in the notification message view, the shelf view is located at the bottom of the last notification. Therefore, a value of ViewEnd can be assigned to TranslationY.

When there are too many notification messages to display all the notification messages on the screen, the shelf view should be located at the bottom of the notification center view. Under this circumstance, a value of maxShelfEnd can be assigned to the TranslationY.

In order to correctly judge whether all the notification messages in the notification message view can be displayed on the screen, values of ViewEnd and maxShelfEnd can be first compared, and a smaller value is assigned to the TranslationY. However, the footer view will also occupy a distance when a footer view position is measured. If a minimum value of ViewEnd and maxShelfEnd is directly assigned to the TranslationY, a distance of the shelf view will be a footer view distance lower than that of the last notification message. Therefore, a value obtained by subtracting the distance of the footer view from the minimum value is as the distance of the shelf view.

In addition, a layout file of the shelf view can be added the full clear key and the storage key. In addition, function logic of the two keys in the footer view is migrated to the shelf view. The function logic includes judgment logic about display and hiding in the footer view and event response logic after clicking the two keys.

When the shelf view stores icons, a X axis coordinate of a right line of a rightmost application icon can be measured in real time, and the storage key can be moved to the coordinate position in real time to ensure that the storage key always dynamically moves with the icon storage during the icon storage.

In the notification message processing method of the embodiments of the present disclosure, the shelf view and the footer view are unified into a new view, that is, the clear key and the storage key in the footer view are set in the shelf view, so that when there are many notification messages, the user can realize the function of clearing all the notification messages without sliding to the last notification message. It can be seen that the shelf view of the embodiments of the present disclosure has the function of icon storage, and also has the function of one-click clearing all the notification messages and one-click expanding the icons. Therefore, the present disclosure can improve the efficiency of clearing the notification messages by the user and improve the user experience.

It should be noted that although the operations of the method in the present disclosure are described in a specific order in the drawings, this does not require or imply that these operations must be performed in that specific order, or that all the operations shown must be performed to achieve the desired results. Additionally or alternatively, some operations may be omitted, multiple operations may be combined into one operation for execution, and/or an operation may be decomposed into multiple operations for execution and the like.

Further, in the present exemplary embodiments, a notification message processing apparatus 800 is also provided, as shown in FIG. 8. The notification message processing apparatus 800 includes an interface display module 810 and a clearing module 820.

The interface display module 810 is configured to display a notification center interface in response to detecting a first sliding operation. The notification center interface includes a notification message view and a shelf view, and the notification message view displays notification messages.

The clearing module 820 is configured to clear all the notification messages in response to detecting a click operation for clearing the key in the shelf view.

Alternatively, the clearing module is specifically configured to clear both displayed and not displayed notification messages in the notification message view in response to all the received notification messages being not displayed in the notification message view. The displayed notification messages in the notification message view are cleared in response to detecting all the received notification messages being displayed in the notification message view.

Alternatively, the notification message processing apparatus of the embodiment of the present disclosure further includes an icon display module. The icon display module 830 is configured to display the application icons corresponding to the notification messages not displayed in the shelf view in response to detecting all the notification messages not displayed in the notification message view.

Alternatively, the shelf view includes a storage key. The notification message processing apparatus provided by the embodiments of the present disclosure also includes a storage module configured to remove a notification message displayed in the notification message view from the notification message view and hide an application icon corresponding to the notification message displayed in the notification message view in the storage key in response to detecting a storage operation for the notification message displayed in the notification message view in the notification message view.

Alternatively, the notification message processing apparatus provided by the embodiments of the present disclosure further includes an icon expansion module configured to display an application icon hidden in the storage key in the shelf view in response to detecting a user's click operation on the storage key.

Alternatively, the storage key moves with the number of the application icons displayed in the shelf view.

Alternatively, the notification message processing apparatus provided by the embodiment of the present disclosure further includes a notification message display module and a notification message removing module.

The notification message display module is configured to display the notification messages not displayed in the notification message view, and remove application icons corresponding to the notification messages not displayed in the shelf view in response to detecting a second sliding operation in the notification center interface.

The notification message removing module is configured to remove the displayed notification messages form the notification message view, and display the application icons corresponding to the displayed notification messages in the shelf view in response to detecting a third sliding operation in the notification center interface.

Specific details of each module or unit in the above device have been described in detail in the corresponding notification message processing method, so it will not be repeated here.

It should be noted that although several modules or units of a device for performing an action are mentioned in the above detailed description, this division is not mandatory. In fact, according to embodiments of the present disclosure, the features and functions of two or more modules or units described above may be embodied in one module or unit. Conversely, features and functions of one module or unit described above may be further divided into a plurality of modules or units.

After considering the description and practicing the invention disclosed herein, those skilled in the art will easily come up with other embodiments of the disclosure. The present disclosure aims to cover any variant, use or adaptive change of the present disclosure. The variant, use or adaptive change follows general principles of the disclosure and includes the common knowledge or frequently used technical means in the technical field not disclosed in the present disclosure. The description and the embodiments are only regarded as exemplary, and the true scope and spirit of the present disclosure are indicated by the following claims.

It should be understood that the present disclosure is not limited to the precise structure already described above and shown in the drawings, and various modifications and changes may be made without departing from its scope. The scope of the present disclosure is limited only by the appended claims.

## Claims

1. A notification message processing method, comprising:
displaying a notification center interface in response to detecting a first sliding operation, wherein the notification center interface comprises a notification message view and a shelf view, and the notification message view displays notification messages; and
clearing all the notification messages in response to detecting a click operation on a clearing key in the shelf view.

2. The method as claimed in claim 1, wherein the clearing all the notification messages comprises:
clearing both displayed notification messages and not displayed notification messages in the notification message view in response to all the received notification messages being not displayed in the notification message view; and
clearing the displayed notification messages in the notification message view in response to detecting all the received notification messages being displayed in the notification message view.

3. The method as claimed in claim 1, wherein the method further comprises:
displaying application icons corresponding to notification messages being not displayed in the shelf view in response to all the received notification messages being not displayed in the notification message view.

4. The method as claimed in claim 1, wherein the shelf view comprises a storage key, and the method further comprises:
removing a notification message displayed in the notification message view from the notification message view, and hiding an application icon corresponding to the notification message displayed in the notification message view in the storage key in response to detecting a storage operation for the notification message displayed in the notification message view.

5. The method as claimed in claim 4, wherein the method further comprises:
displaying an application icon hidden in the storage key in the shelf view in response to detecting a click operation on the storage key.

6. The method as claimed in claim 5, wherein the storage key moves with change of the number of application icons displayed in the shelf view.

7. The method as claimed in claim 4, wherein the method further comprises:
integrating the clear key and the storage key in the shelf view.

8. The method as claimed in claim 1, wherein the method further comprises:
displaying notification messages not displayed in the notification message view and removing application icons corresponding to the notification messages not displayed in the shelf view in response to detecting a second sliding operation in the notification center interface;
removing displayed notification messages from the notification message view, and displaying the application icons corresponding to the displayed notification messages in the shelf view in response to detecting a third sliding operation.

9. The method as claimed in claim 1, wherein the notification center interface further comprises a control center view.

10. A notification message processing apparatus, wherein the apparatus comprises:
an interface display module configured to display a notification center interface in response to detecting a first sliding operation, wherein the notification center interface comprises a notification message view and a shelf view, and the notification message view displays notification messages; and
a clearing module configured to clear all the notification messages in response to detecting a click operation on a clearing key in the shelf view.

11. The apparatus as claimed in claim 10, wherein the clearing all the received notification messages comprises:
clearing both displayed notification messages and not displayed notification messages in the notification message view in response to all the received notification messages being not displayed in the notification message view; and
clearing the displayed notification messages in the notification message view in response to detecting all the received notification messages being displayed in the notification message view.

12. The apparatus as claimed in claim 10, wherein the apparatus further comprises:
an icon display module configured to display application icons corresponding to notification messages being not displayed in the shelf view in response to all the received notification messages being not displayed in the notification message view.

13. The apparatus as claimed in claim 10, wherein the shelf view comprises a storage key, and the apparatus further comprises:
a storage module configured to remove a notification message displayed in the notification message view from the notification message view, and hide an application icon corresponding to the notification message displayed in the notification message view in the storage key in response to detecting a storage operation for the notification message displayed in the notification message view.

14. The apparatus as claimed in claim 13, wherein the apparatus further comprises:
an icon expansion module configured to display an application icon hidden in the storage key in the shelf view in response to detecting a click operation on the storage key.

15. The apparatus as claimed in claim 14, wherein the storage key moves with change of the number of application icons displayed in the shelf view.

16. The device as claimed in claim 13, wherein the interface display module is also configured to integrate the clear key and the storage key into the shelf view.

17. The apparatus as claimed in claim 10, wherein the apparatus further comprises:
a notification message display module configured to display notification messages not displayed in the notification message view, and remove application icons corresponding to the notification messages not displayed in the shelf view in response to detecting a second sliding operation in the notification center interface; and
a notification message removing module configured to remove displayed notification messages from the notification message view, and display the application icons corresponding to the displayed notification messages in the shelf view in response to detecting a third sliding operation.

18. The apparatus as claimed in claim 10, wherein the notification center interface further comprises a control center view.

19. An electronic device, comprising:
a processor; and
a memory configured to store executable instructions of the processor;
wherein the processor is configured to execute the method of any one of claims 1 to 9 by executing the executable instructions.

20. A computer readable storage medium storing instructions that, when executed by a processor, cause the processor to perform the method of any one of claims 1 to 9.
